(19) **Europäisches Patentamt**
**European Patent Office**
**Office européen des brevets**

(11) Veröffentlichungsnummer : **0 279 809 B1**

(12) **EUROPÄISCHE PATENTSCHRIFT**

(45) Veröffentlichungstag der Patentschrift :
27.02.91 Patentblatt 91/09

(51) Int. Cl.⁵ : **H02K 1/14, H02K 23/40**

(21) Anmeldenummer : **86905230.8**

(22) Anmeldetag : **23.09.86**

(86) Internationale Anmeldenummer :
**PCT/DE86/00389**

(87) Internationale Veröffentlichungsnummer :
**WO 87/02839 07.05.87 Gazette 87/10**

(54) **GLEICHSTROMMASCHINE.**

(30) Priorität : 05.11.85 DE 3539131

(43) Veröffentlichungstag der Anmeldung :
31.08.88 Patentblatt 88/35

(45) Bekanntmachung des Hinweises auf die
Patenterteilung :
27.02.91 Patentblatt 91/09

(84) Benannte Vertragsstaaten :
DE FR GB IT

(56) Entgegenhaltungen :
DE-A- 1 908 323
DE-A- 2 202 340
DE-C- 843 571
FR-A- 2 167 802

(73) Patentinhaber ; ROBERT BOSCH GMBH
Postfach 50
D-7000 Stuttgart 1 (DE)

(72) Erfinder : WÜRTH, Hans
Wilhelm-Blos-Str. 67
D-7140 Ludwigsburg (DE)

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Die Erfindung geht von einer Gleichstrommaschine nach der Gattung des Patentanspruchs aus. Es sind schon zahlreiche Gleichstrommaschinen mit Wellenwicklung bekannt. Sie haben jedoch den Nachteil, daß sie wegen der zwei durch die Wellenwicklung gegebenen wickelköpfe eine größere Baulänge haben als Gleichstrommaschinen mit einer aus einzelnen Spulen, welche jeweils einem Pol zugeordnet sind, gebildeten Erregerwicklung. Auch haben wellenwicklungen eine größere mittlere windungslänge als die entsprechenden aus Spulen gebildeten wicklungen. wellenwicklungen haben jedoch gegenüber aus einzelnen Spulen zusammengesetzten wicklungen den Vorteil, daß sie wesentlich kostengünstiger herzustellen sind, weil sie keine kostenintensiven Verbindungs- und Schaltungsmaßnahmen für sich erfordern. Aus der DE-A-22 02 340 ist eine Gleichstrommaschine mit zwei axial versetzt angeordneten Polpaaren bekannt, um die eine wellenwicklung gelegt ist. Um Raum für die wickelköpfe zu erhalten, sind die Pole am jeweils über das Ankerblechpaket hinausragenden Ende ausgespart. Dadurch wird in nachteiliger weise die wirksame Pollänge und somit die Leistung der Gleichstrommaschine reduziert, ohne die Baulänge der Gleichstrommaschine zu verkürzen und ohne den werkstoffbedarf für die wellenwicklung zu verringern.

Aus der DE-A-19 08 323 ist noch der Stator eines Spaltpolmotors bekannt, bei dem die geblechten Polpaare axial versetzt angeordnet sind, wobei die wicklungsfreien Stirnseiten der Pole mit den wickelköpfen der benachbarten Pole in jeweils einer Ebene liegen.

### Aufgabe, Lösung und Vorteile der Erfindung

Der Erfindung liegt die Aufgabe zugrunde, eine Gleichstrommaschine der eingangs genannten Art mit weniger werkstoff und geringeren Montagekosten sowie mit verkürzter Baulänge bei möglichst gleichbleibender Leistung zu schaffen, so daß sie sich auch für Andrehvorrichtungen zum Einbau in immer kleineren zur Verfügung stehenden Räumen in Kraftfahrzeugen eignet.

Zur Lösung der Aufgabe sind die im Patentansruch angegebenen Maßnahmen vorgesehen.

Dabei ist von Vorteil, daß bei gleicher wirksamer Länge der Pole und des Ankerblechpakets durch die axiale Versetzung der Polpaare die Baulänge der Gleichstrommaschine verkürzt und der Werkstoffbedarf mindestens für die Wellenwicklung verringert werden kann, ohne die Leistung der Maschine wesentlich zu reduzieren.

### Zeichnung

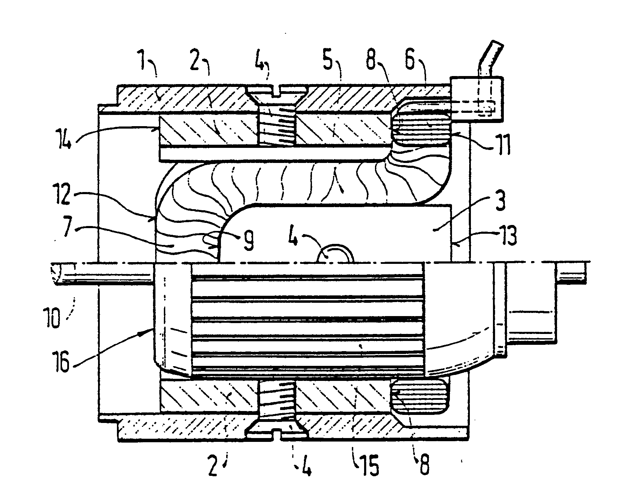

Ein Ausführungsbeispiel der Erfindung ist in der Zeichnung dargestellt. Sie zeigt einen Teil einer Gleichstrommaschine teilweise im Längsschnitt.

### Beschreibung des Ausführungsbeispieles

In einem Gehäuse 1 einer Gleichstrommaschine beispielsweise für eine Andrehvorrichtung für Brennkraftmaschinen sind vier Pole untergebracht, die sich als zwei Polpaare 2 bzw. 3 gegenüberliegen. Die Polpaare 2 und 3 sind mit Schrauben 4 im Gehäuse 1 angeschraubt. Die Polpaare 2 und 3 tragen eine als Wellenwicklung 5 ausgebildete Erregerwicklung, deren im wesentlichen in Umfangsrichtung verlaufende und Wickelköpfe bildende abschnitte 6 und 7 an der Stirnseite 8 bzw. 9 der Polpaare 2 bzw. 3 anliegen. Die Polpaare 2 und 3 sind nun so in Richtung der Längsachse 10 des Gehäuses 1 und somit der Gleichstrommaschine versetzt angeordnet, daß die Stirnseite 11 bzw. 12 der abschnitte 6 und 7 der Wellenwicklung 5 mit der wicklungsfreien Stirnseite 13 bzw. 14 der polpaare 2 bzw. 3 jeweils in einer senkrecht zur Längsachse 10 der Gleichstrommaschine verlaufenden Ebene liegen. Die Polpaare 2 und 3 sind um eine Wickelkopfhöhe gegeneinander versetzt. Das ergibt jeweils eine gegenüber der Mitte eines Blechpakets 15 eines sich konzentrisch zur Längsachse 10 durch die Wellenwicklung 5 erstreckenden ankers 16 um die halbe Wickelkopfhöhe wechselseitig außermittig versetzte anordnung der Polpaare 2 und 3 im Gehäuse 1. Dadurch überragen die Wickelköpfe 6 und die Enden des Polpaares 3 eine Stirnseite des Blechpaketes 15 und die Wickelköpfe 7 und die freien Enden des Polpaars 2 die andere Stirnseite des Blechpakets 15 jeweils um etwa die halbe Wickelkopfhöhe in Richtung der Längsachse 10. Die Baulänge der Gleichstrommaschine ist somit um eine Wickelkopfhöhe verringert, ohne die Leistung der Gleichstrommaschine nennenswert zu verringern. Die Wellenwicklung 5 hat ebenfalls eine kürzere mittlere Windungslänge, was eine Werkstoffersparnis für die Wellenwicklung ergibt. Somit können auch Wellenwicklungen in Gleichstrommaschinen gegenüber aus einzelnen Spulen gebildeten Wicklungen kostengünstig verwendet werden.

### Ansprüche

1. Gleichstrommaschine mit einem Gehäuse (1), in dem mindestens zwei Polpaare (2 bzw. 3) angeordnet sind, um welche eine wellenwicklung (5) gelegt ist, wobei die Polpaare (2 bzw. 3) parallel zur Längsachse (10) des Gehäuses (1) gegeneinander versetzt im Gehäuse (1) angeordnet sind, dadurch gekennzeichnet, daß die wirksame Länge der Polpaare (2 bzw. 3) und die wirksame Länge eines Blechpaketes (15) eines Ankers (16) gleich groß sind und daß die in einer Ebene liegenden Wickelköpfe (6) und wicklungsfreien Stirnseiten (13) des einen Polpaares (3) und die in einer anderen Ebene liegenden Wickelköpfe (7) und wicklungsfreien Stirnseiten (14) des anderen Polpaares (2) die Stirnseiten des Blechpaketes (15) des Ankers (16) jeweils um die halbe Wickelkopfhöhe überragen.

## Claims

1. D.C. generator having a housing (1), in which at least two pairs of poles (2 or 3) are arranged, around which a wave winding (5) is laid, the pairs of poles (2 or 3) being arranged parallel to the longitudinal axis (10) of the housing (1) mutually offset in the housing (1), characterized in that the effective length of the pairs of poles (2 or 3) and the effective length of a laminated core (15) of an armature (16) are of the same size, and in that the winding overhangs (6) lying in one plane and winding-free end faces (13) of one pair of poles (3), and the winding overhangs (7) lying in another plane and winding-free end faces (14) of the other pair of poles (2) project beyond the end faces of the laminated core (15) of the armature (16) by half the winding overhang height in each case.

## Revendications

1. Générateur à courant continu comprenant un boîtier (1), dans lequel sont disposés au moins deux paires de pôles (2 et 3) autour desquels est disposé un enroulement ondulé, sur lequel les paires de pôles (2 et 3) sont disposées dans le boîtier (1), parallèlement à l'axe longitudinal (10) du boîtier (1) avec un décalage entre elles, caractérisé en ce que la longueur efficace des paires de pôles (2 et 3) et la longueur efficace d'un empilage de tôles (15) d'un induit (16) sont de même grandeur et en ce que les têtes de bobines (6) situées dans un plan et les faces frontales (13) dépourvues d'enroulements d'une des paires de pôles (3) et les têtes de bobines (7) situées dans un autre plan, ainsi que les faces frontales (14) dépourvues d'enroulements de l'autre paire de pôles (2), dépassant respectivement de la moitié de la hauteur d'une tête de bobine les faces frontales de l'empilage de tôles (15) de l'invention (16).